# EUROPEAN PATENT APPLICATION

(11) **EP 1 548 663 A2**
(43) Date of publication of application: **29.06.2005**
(21) Application number: 04256785.9
(22) Date of filing: 03.11.2004
(51) Int. Cl.: G07F 1/00

(54) **Provision of financial information**

(30) Priority: 13.12.2003 GB 0328963
(71) Applicant: NCR INTERNATIONAL INC., Dayton, Ohio 45479 (US)
(72) Inventor: Black, Jonathan Simon, Dundee DD2 1BN (GB)
(74) Representative: Williamson, Brian

(57) **Abstract**

A system and method for providing information to a user of a self-service terminal such as an automated teller machine by offering them the opportunity to receive information via a communication channel that is separate from the ATM network. In the event that this option is selected, an electronic or telecommunications address of a device, such as a mobile telephone, associated with the user is identified and the requested information is sent to that address, together with advertising material.

## Description

The present invention relates to a system and method for providing financial information to a user of a self-service machine, such as a point of sales terminal or an automated teller machine (ATM).

At present users of self-service terminals such as ATMs generally can only be provided with financial information when actually using the terminal and via the ATM network. There is however a drive to allow users to be provided with information via other communication channels, such as mobile devices, for example mobile telephones or PDAs. Whilst this can be advantageous, a problem is the cost of sending such messages over external networks.

According to one aspect of the present invention, there is provided a method comprising: identifying a user at a self service terminal; identifying an electronic or telecommunications address of a device, such as a mobile telephone, associated with the user; receiving a user request for information via the self service terminal, and sending the requested information to the user's device address, together with advertising material.

To offset the cost of sending the requested information, in practice, the provider of the advertising material would pay at least in part for the costs associated with sending the data. This means that the user does not have to pay for the information to be sent to their device.

Preferably, the method further comprises selecting the advertising material for directing to the user. The advertising material may be derived from a customer relationship management system. The advertising material may be specifically targeted for the user.

The method may further comprise monitoring which adverts are sent to which addresses and billing the advertisers accordingly.

The step of sending the requested information may be done remotely from the self service terminal. The step of sending the requested information may be done by the self service terminal.

According to another aspect of the present invention, there is provided a system that is configured to: identify a user at a self service terminal; identify an electronic or telecommunications address of a device, such as a mobile telephone, associated with the user; receive a user request for information via the self service terminal, and send the requested information to the user's device address, together with advertising material.

The system may be configured to send the requested information to the user's device from the self-service terminal. Alternatively, the system may be configured to send the requested information to the user's device from a device located remotely from the self-service terminal.

The system may include a plurality of different communication means for allowing information to be sent to the user's device. For example, the system may include a mobile telephone transmitter for transmitting messages to mobile telephones.

According to yet another aspect of the present invention, there is provided a computer program, preferably on a data carrier or a computer readable medium, the computer program having code or instructions for: identifying a user at a self service terminal; identifying an electronic or telecommunications address of a device, such as a mobile telephone, associated with the user; receiving a user request for information via the self service terminal, and sending the requested information to the user's device address, together with advertising material.

Various aspects of the invention will now be described by way of example only and with reference to the accompanying drawings, of which:
Figure 1 is block diagram of a system for providing targeted information to a user;
Figure 2 is a flow diagram of a method for providing information using the system of Figure 1, and
Figure 3 is block diagram of another system for providing targeted information.

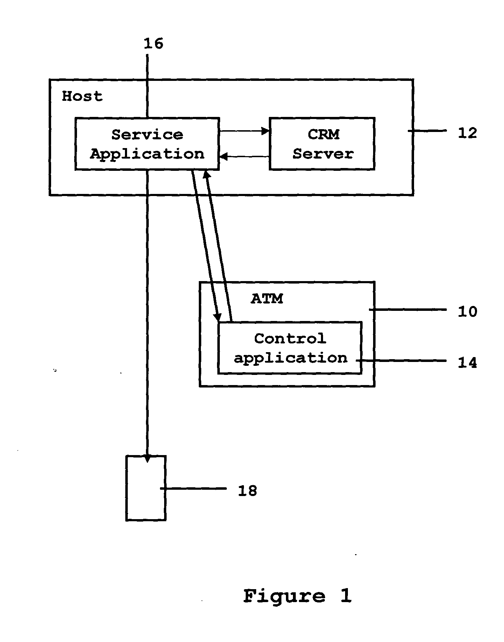

Figure 1 shows an ATM 10 that is connected to a host terminal 12. Included in the ATM 10 is a control application 14 that is operable to control internal ATM functionality, such as processing user inputs. The control application 14 can additionally initiate communications with a service application 16 in the host 12. The service application 16 is operable to identify the current user from an ATM start transaction message, verify that user typically using information read from the user's bankcard and then effect any financial transactions in response to user inputs. The service application 16 is also able to send information relating to the financial transaction to a pre-determined device, typically a mobile device 18, specified by the user. To allow for this, a record of the user's selected device 18 is stored at the host 12, together with a unique user identifier, such as the user's unique banking identifier, so that as and when desired the host 12 can retrieve that information.

The capability of the user's personal device 18 affects the format of the data that can be sent, for example for standard mobile phone SMS could be used to provide a basic text message. In contrast for Java mobile telephones, Java applications or files that can be read by Java applications could be sent. The capability of the user's mobile device 18 also determines how the information is delivered; some examples of delivery mechanisms include GSM, GPRS. This delivery information is stored in association with the user's mobile details, and used by the host to determine how to deliver the message. In order to maximize the scope of the system, the host 12 is typically provided with a plurality of different communication mechanisms (not shown). For example, the host 12 may include mobile telephone communication means to allow SMS messages to be sent or a facility for connecting to the internet and sending, for example, e-mails. In any case, the host 12 is able to identify the user's device address and send information directly to it.

In addition to communicating with the ATM 10 and the user's mobile device 18, the host service application 16 can also communicate with a customer relationship management server (CRM) 20. This is provided in order to identify advertising material associated with specific customers. To this end the CRM 20 maintains a database of customers that includes personalized information for each customer, such as spending patterns, preferred shops etc. This information can be provided to the CRM 20 via any suitable channel, such as by telephone, using a call centre, or the internet. As is known in the field, by using personalized CRM information it is possible to target advertising material to specific users.

In order to offset the cost of sending financial information to the user, advertising material may be derived from the CRM 20, and sent to the user's specified terminal 18 with the financial information, with the advertiser bearing at least some, preferably all, of the communication costs. To this end, when a customer is conducting a session at the ATM 10, the host 12 is operable to notify the CRM 20 of the user's identity, receive specific targeted user information from the CRM 20, for example advertising, and include this in the message that is sent to the user. The host 12 is also operable to maintain a record of what information is sent to which customer for use when billing.

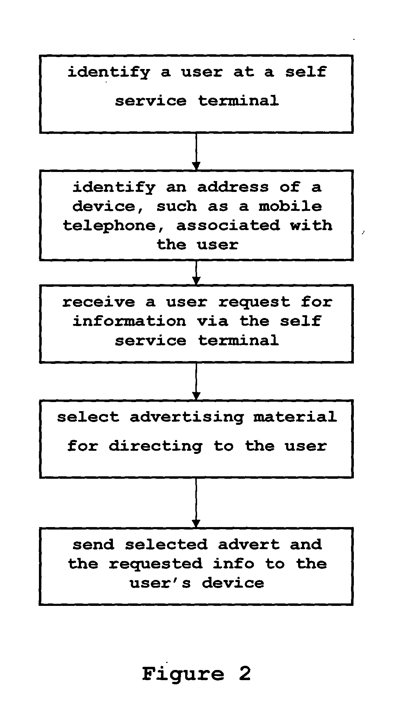

Figure 2 shows some of the steps that are taken in a typical user interaction with the ATM 10. Before this, however, a user has to firstly register their mobile device 18 of choice with their bank, together with the address or telephone number associated with the device. This information is stored in association with the user's unique identification number and is made available to the host 12. The user also has to be registered with the CRM 20. When the user subsequently uses the ATM 10, they put their card into the machine 10 as is standard. Information on the card is then read and a signal is sent to the host 12 to confirm the identity of the user. In the event that the user is authorized, he can carry out any selected transactions. At any stage of the transaction, the ATM 10 may give the user the option of receiving information at their specified mobile device 18. If this option is selected, a signal indicative of this is sent to the host 12.

In response to the ATM signal requesting that data be sent via an external communication channel, the host 12 gathers the information requested by the user and interrogates the CRM 20 for user specific advertising material. This causes the CRM 20 to search its records and identify the relevant material and send it to the host 12. Then the host determines the nature of the user's selected device and its address, constructs a message that includes the CRM sourced material as well as the transaction information and uses the appropriate communication channel to send the information to the user's device 18.

As an example of the type of message that may be sent, if the user specified device is a standard mobile telephone a text message could be sent as follows: "Current Account Balance: £1500 brought to you by NCR, for further info visit www.ncr.com", this message including both financial and advertising information. For Java enabled telephones, the message could be a full application for first time users or situations where it is felt the application is small enough to justify creating a separate one for each transaction. Alternatively for consumers who already have an application on their phone, application files could be sent to view information such as a receipt, a statement or a snapshot view of the consumer's financial information at that moment in time. In this case, the campaign information can be included in the application/file for example using a splash screen, i.e. a time delayed pop-up that includes campaign information. In any event once the message is sent, a record is kept of the CRM material, so that the communication event can be charged to the source of the advertising material.

The system and method in which the invention is embodied provides information to an ATM user by advantageously offering them the opportunity to receive that information via a communication channel that is separate from the ATM network. In the event that this option is selected, an electronic or telecommunications address of a device, such as a mobile telephone, associated with the user is identified and the requested information is sent to that address, together with advertising material. Including advertising material in the messages provides a mechanism for offsetting the cost of sending it.

A skilled person will appreciate that variations of the disclosed arrangements are possible without departing from the invention. For example, whilst a conventional bank card is described as being the means for identifying the user at the ATM 10, any other suitable means could be used, such as an RFID tag or a key fob. Of course, in these cases, the ATM would have to be provided with a suitable reader mechanism.

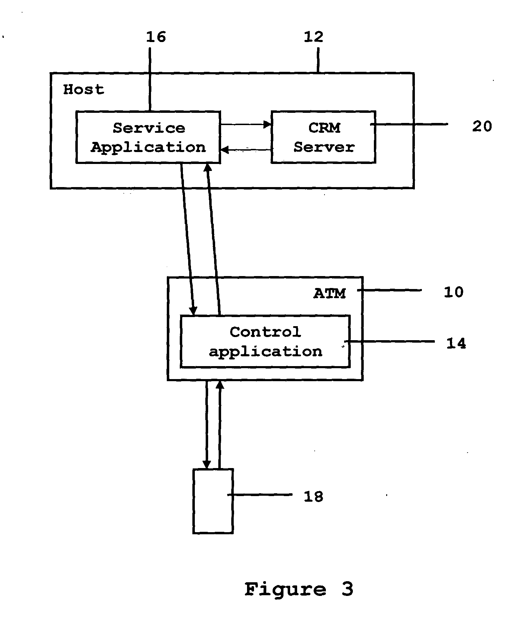

Furthermore, although the invention has been described primarily with reference to a system in which the host constructs the message and sends it to the user over a predetermined channel, instead this could be done at the ATM 10. Figure 3 shows a system in which CRM information is sent from the CRM server 20 via the service application in the host to the control application 14 in the ATM 10. In this case, the control application 14 is able to create the message and the ATM 10 is able to communicate directly with the mobile device 18. The communication could be done using any suitable channel, but may for example via a relatively low range wireless link, such as Bluetooth or an IR link. Of course, this arrangement could be used as an add-on to the system of Figure 1 or in place thereof.

Accordingly, the above description of a specific embodiment is made by way of example only and not for the purposes of limitations. It will be clear to the skilled person that minor modifications may be made without significant changes to the operation described.

## Claims

1. A method for providing information to a user of a self service terminal such as an automated teller machine, the method comprising: identifying a user at a self service terminal; identifying an electronic or telecommunications address of a device, such as a mobile telephone, associated with the user; receiving a user request for information via the self service terminal, and sending the requested information to the user's device address, together with advertising material.

2. A method as claimed in claim 1 wherein the requested information is a financial statement or a digital receipt for the transaction carried out.

3. A method as claimed in claim 1 or claim 2 further comprising selecting the advertising material for directing to the user.

4. A method as claimed in any of the preceding claims wherein the advertising material is derived from a customer relationship management system.

5. A method as claimed in any of the preceding claims wherein the advertising material is specifically targeted to the user.

6. A method as claimed in any of the preceding claims further comprising monitoring which adverts are sent to which addresses and billing the advertisers accordingly.

7. A method as claimed in any of the preceding claims wherein the step of sending the requested information is done remotely from the self service terminal.

8. A method as claimed in any of claims 1 to 6 wherein the step of sending the requested information is done by the self service terminal.

9. A system comprising means for identify a user at a self-service terminal; means for identifying an electronic or telecommunications address of a device, such as a mobile telephone, associated with the user; means for receiving a user request for information via the self service terminal, and means for sending the requested information to the user's device address, together with advertising material.

10. A system as claimed in claim 9 wherein the means for sending the requested information to the user's device are located in the self-service terminal.

11. A system as claimed in claim 9 wherein the means for sending the requested information to the user's device are located remotely from the self-service terminal.

12. A system as claimed in any of claims 9 to 11 including a plurality of different communication means for allowing information to be sent to a plurality of different types of user devices.

13. A computer program, preferably on a data carrier or a computer readable medium, the computer program having code or instructions for: identifying a user at a self service terminal; identifying an electronic or telecommunications address of a device, such as a mobile telephone, associated with the user; receiving a user request for information via the self service terminal, and sending the requested information to the user's device address, together with advertising material.
